# EUROPEAN PATENT APPLICATION

(11) **EP 4 340 101 A1**
(43) Date of publication of application: **20.03.2024**
(21) Application number: 22205449.6
(22) Date of filing: 04.11.2022
(51) Int. Cl.: H01M 50/204, H01M 50/24, H01M 50/271

(54) **BATTERY CASE AND BATTERY DEVICE**

(30) Priority: 16.09.2022 CN 202211125721
(71) Applicant: CALB Co., Ltd., Changzhou City, Jiangsu Province (CN)
(72) Inventor: DENG, Feng, Changzhou City, Jiangsu Province (CN); CAO, Zhijuan, Changzhou City, Jiangsu Province (CN)
(74) Representative: Becker, Eberhard

(57) **Abstract**

The invention discloses a battery case (101) and a battery device. A groove (21) is disposed on a side surface of a boundary beam (20) facing a bottom plate (10). The groove (21) is disposed around an accommodating space (n0) formed by the boundary beam (20) and the bottom plate (10). A sealing strip (30) is disposed in the groove (21) along an extending direction of the groove (21), and the sealing strip (30) is in contact with the bottom of the groove (21) and the bottom plate (10), respectively. The sealing of the connection between the boundary beam (20) and the bottom plate (10) may be implemented by the sealing strip (30).

## Description

### BACKGROUND

### Technical Field

The invention relates to the technical field of batteries, and particularly to a battery case and a battery device.

### Description of Related Art

A battery pack generally includes a case and a battery disposed in the case. The case generally includes a boundary beam and a liquid cooling plate disposed at the bottom. When the liquid cooling plate is connected to the boundary beam by fasteners, how to ensure the sealing performance of the connection between the liquid cooling plate and the boundary beam is a technical problem to be solved urgently by those skilled in the art.

### SUMMARY

Embodiments of the invention provide a battery case and a battery device.

For one aspect, an embodiment of the invention provides a battery case, including a bottom plate, and a boundary beam connected to the bottom plate. The boundary beam and the bottom plate form an accommodation space for accommodating batteries.

A groove is disposed on a side surface of the boundary beam facing the bottom plate, the groove is disposed around the accommodating space, a sealing strip is disposed in the groove along an extending direction of the groove, and the sealing strip is in contact with a bottom of the groove and the bottom plate, respectively. There is a closed chamber between at least one side wall of the groove and the sealing strip.

The sealing strip has a first volume at a first temperature, the sealing strip has a second volume at a second temperature, the first temperature is less than the second temperature, and a half of a difference between the second volume and the first volume is less than a volume of the closed chamber.

Accordingly, the groove is disposed on a side surface of the boundary beam facing the bottom plate. The groove is disposed around an accommodating space formed by the boundary beam and the bottom plate. A sealing strip is disposed in the groove along an extending direction of the groove, and the sealing strip is in contact with the bottom of the groove and the bottom plate, respectively. The sealing of the connection between the boundary beam and the bottom plate may be implemented by the sealing strip.

For another aspect, an embodiment of the invention provides a battery device, including the battery case provided by the embodiments of the invention, and a battery disposed in the battery case.

Accordingly, the groove is disposed on a side surface of the boundary beam facing the bottom plate. The groove is disposed around an accommodating space formed by the boundary beam and the bottom plate. A sealing strip is disposed in the groove along an extending direction of the groove, and the sealing strip is in contact with the bottom of the groove and the bottom plate, respectively. The sealing of the connection between the boundary beam and the bottom plate may be implemented by the sealing strip.

### BRIEF DESCRIPTION OF THE DRAWING

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic view of a partial structure of a battery case provided in an embodiment of the invention.
FIG. 2 is the sectional view shown along the XI-X2 direction in FIG. 1.
FIG. 3 is another sectional view shown along the direction X1-X2 in FIG. 1.
FIG. 4 is a schematic three-dimensional structural view of a battery case provided in an embodiment of the invention.
FIG. 5 is a schematic structural view of a battery device provided in an embodiment of the invention.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.
In the context, it should also be understood that when an element or features is provided "outside" or "inside" of another element(s), it can be directly provided "outside" or "inside" of the other element, or be indirectly provided "outside" or "inside" of the another element(s) by an intermediate element.

In the related art, the battery case may include a boundary beam and a liquid cooling plate at the bottom, and the boundary beam is connected to the liquid cooling plate and form an accommodating space for accommodating batteries. To implement the sealing of the connection between the liquid cooling plate and the boundary beam, a groove may be disposed on a side surface of the liquid cooling plate facing the boundary beam, a sealing strip is disposed in the groove, and the sealing strip is configured to seal the connection between the liquid cooling plate and the boundary beam.

Because the liquid cooling plate has a good heat exchange effect, even when the battery case is in a high temperature environment, the heat exchange effect of the liquid cooling plate may still prevent the temperature of the sealing strip from being too high, thereby preventing the failure of the sealing strip.

However, the liquid cooling plate is generally stamped and formed, and the production cost is high. If a groove is disposed on the liquid cooling plate, this may increase not only the difficulty in slotting but also further the production cost of the liquid cooling plate, resulting in an increase of the production cost of the battery case.

Therefore, the embodiments of the invention provide a battery case for improving the sealing effect of the battery case in a high temperature environment.

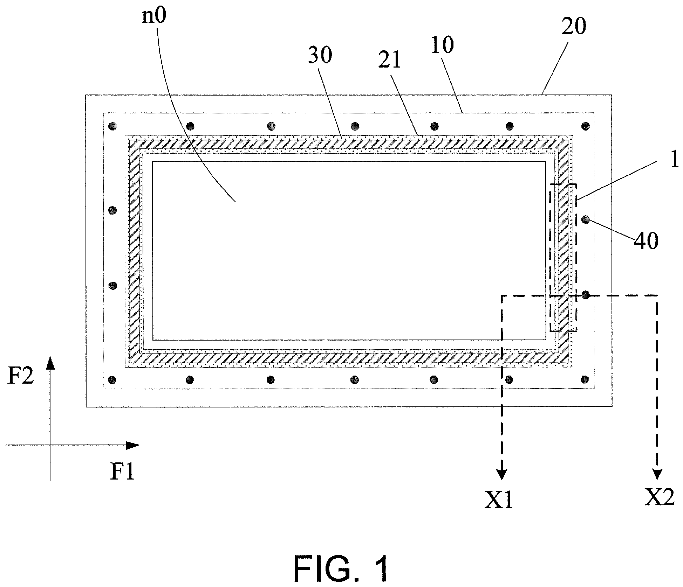

Specifically, as shown in FIG. 1 to FIG. 3, an embodiment of the invention provides a battery case which may include a bottom plate 10 and a boundary beam 20 connected to the bottom plate 10. The boundary beam 20 may be disposed around the periphery of the bottom plate 10, and the boundary beam 20 and the bottom plate 10 form an accommodating space n0 for accommodating batteries (not shown in the figure).

A groove 21 is disposed on a side surface of the boundary beam 20 facing the bottom plate 10, and the groove 21 is disposed around the accommodating space n0. A sealing strip 30 is disposed in the groove 21 along the extending direction of the groove 21, that is, the sealing strip 30 is also disposed around the accommodating space n0. The sealing strip 30 is in contact with a groove bottom c1 of the groove 21 and the bottom plate 10, respectively, and there is a closed chamber 22 between at least one side wall c2 of the groove 21 and the sealing strip 30.

The sealing strip 30 has a first volume at a first temperature, the sealing strip 30 has a second volume at a second temperature, and the first temperature is less than the second temperature. A half of the difference between the second volume and the first volume is less than the volume of the closed chamber 22.

Accordingly, a groove is disposed on one side surface of the boundary beam facing the bottom plate, the groove is disposed around the accommodating space, and a sealing strip is disposed on the groove along the extending direction of the groove. The sealing strip is connected to the groove bottom of the groove and the bottom plate, respectively. The sealing of the connection between the boundary beam and the bottom plate may be implemented through the sealing strip.

In addition, there is a closed chamber between at least one side wall of the groove and the sealing strip, so with the set volume of the closed chamber and the set volume of the sealing strip, if the sealing strip expands at a high temperature, the closed chamber may provide space for the expansion of the sealing strip to prevent the sealing failure resulting from the separation of the heat exchange plate and the boundary beam when the sealing strip expands, and thereby the sealing performance of the battery case may be improved.

In some embodiments, the boundary beam may be extruded profiles, and there may be a cavity inside for easily processing the groove on the boundary beam and for lower manufacturing cost as well as not reducing the strength of the boundary beam. Therefore, by processing the groove on the boundary beam, the sealing effect of the connection may be improved, and meanwhile, the manufacturing difficulty and the manufacturing cost may be reduced, ensuring the strength of the battery case and well protecting the batteries in the battery case well.

In some embodiments, the first temperature is 10°C to 30°C and the second temperature is 40°C to 70°C.

The first temperature may be, but not limited to, 10°C, 20°C, 25°C or 30°C. The second temperature may be, but not limited to, 40°C, 50°C, 60°C or 70°C.

Accordingly, the first temperature may be interpreted as the normal temperature, the second temperature may be interpreted as a high temperature. When the sealing strip is made of organic materials, at a high temperature, the sealing strip may expand, leading to an increase of the volume of the sealing strip. With the configuration of the closed chamber, part of the space may be reserved for the expansion of the sealing strip to prevent the separation of the bottom plate and the boundary beam when the sealing strip expands. Therefore, the sealing effect of the connection between the bottom plate and the boundary beam may be improved, and the sealing failure at the high temperature may be prevented.

In some embodiments, the battery case may also be applied to a high-humidity environment. The sealing strip also expands in a high-humidity environment, so with the configuration of the closed chamber, space may still be reserved for the expansion of the sealing strip, thereby preventing the sealing failure when humidity is high.

In some embodiments, the closed chamber is provided with air, and the humidity in the closed chamber is less than or equal to 50%.

Accordingly, the humidity of the closed chamber may be controlled to prevent the humidity in the closed chamber from being too high and further prevent excessive expansion of the sealing strip, thereby contributing to improving the sealing effect and prolonging the service life of the sealing strip.

In some embodiments, the method for controlling the humidity in the closed chamber may be any method known to those skilled in the art, such as, but not limited to, configuring openings in a structure around the closed chamber to easily control the humidity in the closed chamber through the openings.

In some embodiments, carbon dioxide, nitrogen, or an inert gas is provided in the closed chamber.

The inert gas may include, but is not limited to, other inert gases, such as argon and the like.

Accordingly, the sealing strip may be prevented from being in an oxidizing environment, and the expansion of the sealing strip may be further prevented. Therefore, the sealing effect may be further improved, and the service life of the sealing strip may also be prolonged.

In some embodiments, the method for controlling the gas in the closed chamber may be any method known to those skilled in the art, such as, but not limited to, configuring openings in a structure around the closed chamber to draw out the air in the closed chamber and to fill carbon dioxide, nitrogen, or an inert gas into the closed chamber through the openings, which is not limited herein.

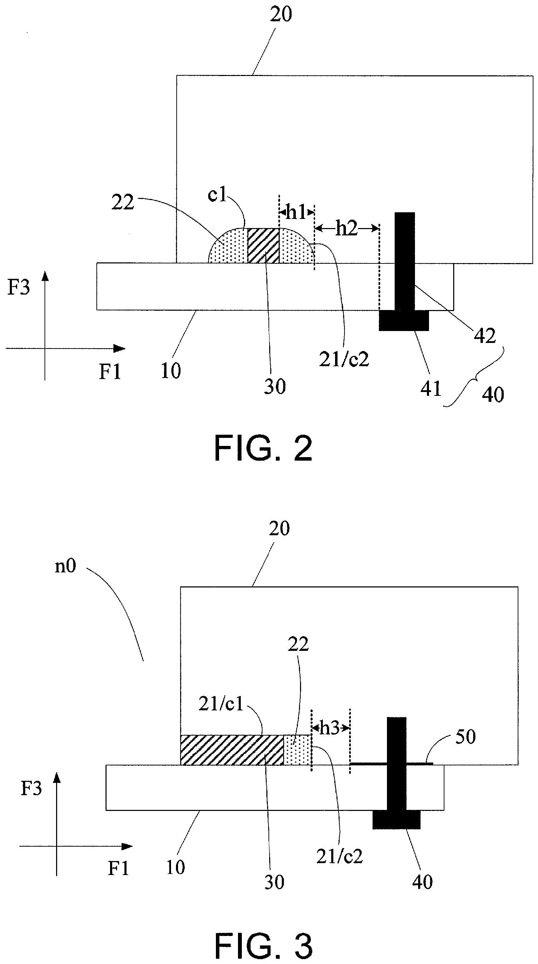

In some embodiments, as shown in FIG. 2, there are the closed chambers 22 between the side walls c2 on two sides of the groove 21 and the sealing strip 30.

As shown in FIG. 2, the closed chambers 22 are disposed to the left side and the right side of the sealing strip 30, and the volumes of the two closed chambers 22 may be set to be approximately equal.

Accordingly, space may be reserved for two sides of the sealing strip, and this prevents a certain side of the sealing strip from being unable to withstand the expansion of the sealing strip when no space is reserved, and thereby the sealing effect may be effectively improved.

In some embodiments, the configuration may be illustrated as follows.

As shown in FIG. 3, the groove is disposed at an edge of the boundary beam, so that in the F1 direction, the groove has only one side wall (e.g., the right side wall). Meanwhile, there is the closed chamber 22 between the right side wall of the groove and the sealing strip 30; that is, the number of the closed chamber 22 is singular.

Meanwhile, the closed chamber may reserve space for the expansion of the sealing strip, and the space to the left side of the boundary beam may also provide space for the expansion of the sealing strip as well, thereby improving the sealing effect of the connection.

In some embodiments, the length of the closed chamber in the first direction is greater than a half the magnitude of the expansion of the sealing strip in the first direction.

The first direction is perpendicular to the extending direction of the groove and parallel to the surface of the bottom plate. The magnitude of the expansion is a difference between the length of the sealing strip at the second temperature and the length of the sealing strip at the first temperature in the first direction.

Referring to FIG. 2, the first direction is the F1 direction shown in the drawing, the length of the closed chamber 22 in the first direction is represented by h1, and the magnitude of the expansion of the sealing strip 30 in the first direction is the magnitude of the expansion of the sealing strip 30 in the F1 direction.

In addition, when the sealing strip 30 expands, the amount of the expansion to the left side and the amount of the expansion to the right side of the sealing strip 30 may be equal, so it may be regarded that the magnitude of the expansion to the left side is a half of the overall magnitude of the expansion, and the magnitude of the expansion to the right side is also a half of the overall magnitude of the expansion.

Note that to the right of FIG. 2, the length of the closed chamber 22 in the first direction is h1, and to the left of FIG. 2, the length of the closed chamber 22 in the first direction may also be h1, but only the length of the closed chamber 22 in the first direction to one side of FIG. 2 is marked.

Accordingly, even if the sealing strip expands, since the length of the closed chamber in the first direction is longer, enough space may be reserved for the expansion, and the separation of the boundary beam and the bottom plate resulting from insufficient reserved space is prevented, thereby effectively improving the sealing effect of the connection between the bottom plate and the boundary beam.

Moreover, if there is a sealant outside the groove, since the length of the closed chamber in the first direction is longer, the contact between the sealing strip and the sealant may be prevented, and further the failure of the sealing strip resulting from the contact may be prevented, thereby improving the sealing effect of the connection.

In some embodiments, as shown in FIG. 2, the length h1 of the closed chamber 22 in the first direction is 2 mm to 4 mm.

Accordingly, this may facilitate the processing, the difficulty in manufacturing the grooves is reduced, and the manufacturing cost is further reduced. In addition, the waste resulting from the excessive volume of the closed chamber may be further prevented, an oversized boundary beam in the F1 direction may be prevented, and an oversized battery case may be further prevented, thereby contributing to downsizing the battery case.

In some embodiments, the cross-sectional area of the closed chamber in a direction perpendicular to the extending direction of the groove is 4 mm² to 18 mm².

Referring to FIG. 1 and FIG. 2, for the groove 21 in the dotted frame 1 in FIG. 1, the extending direction thereof is the F2 direction. The plane perpendicular to the F2 direction is the plane formed by the F1 direction and the F3 direction (which may be called the reference plane at present), and the cross section of the closed chamber 22 parallel to the reference plane is the cross section of the closed chamber 22 shown in FIG. 2.

Accordingly, this may facilitate the processing, the difficulty in manufacturing the grooves is reduced, and the manufacturing cost is further reduced.

Moreover, if the cross-sectional area of the closed chamber is too large leading to a large-sized groove, the stability of the connection between the boundary beam and the bottom plate may be reduced, resulting in structural instability; if the cross-sectional area of the closed chamber is too small leading to small space reserved for the expansion of the sealing strip, the bottom plate is separated from the boundary beam by the sealing strip and thereby the sealing effect of the connection is reduced. Therefore, setting a proper volume of the cross-sectional area of the closed chamber may improve the sealing effect of the connection on the basis of ensuring the stability of the connection.

In some embodiments, as shown in FIG. 3, a sealant 50 is disposed between the boundary beam 20 and the bottom plate 10, and the sealant 50 is disposed on a side of the groove 21 away from the accommodating space n0. As shown in FIG. 3, the accommodating space n0 is to the left side of the groove 21, and the sealant 50 is to the right side of the groove 21.

Accordingly, referring to FIG. 3, the sealing strip 30 is in contact with the groove bottom c1 and the bottom plate 10, respectively, so the left part of the closed chamber 22 is sealed by the sealing strip 30. For the connection between the boundary beam 20 on the right side of the closed chamber 22 and the bottom plate 10, when the sealant 50 is disposed, the sealant 50 seals the connection, and thereby the space indicated by the reference numeral 22 in FIG. 3 may be formed into a closed chamber.

In addition, the inner sealing between the boundary beam and the bottom plate may be implemented by a sealing strip, the outer sealing between the boundary beam and the bottom plate may be implemented by a sealant, accordingly a double sealing may be implemented, and the sealing effect of the connection may be effectively improved.

In some embodiments, as shown in FIG. 3, there is a distance between the sealant 50 and the groove 21.

In FIG. 3, the distance between the sealant 50 and the groove 21 may be represented by h3.

When connecting the bottom plate and the boundary beam, the sealant is mostly fluid, so the sealant may spread out due to the extrusion of the bottom plate and the boundary beam during connection. There is a distance between the sealant and the groove, so this may provide space for the spread of the sealant, thereby preventing the contact between the sealant and the sealing strip during connection and further preventing the failure of the sealing strip resulting from the contact between the sealant and the sealing strip. Therefore, the sealing effect of the connection during connection may be further improved.

In addition, after being connected, the bottom plate and the boundary beam may be dried or set aside for a period of time, so that the sealant is solidified and cured before proceeding to the next process, which may improve the stability of the bottom plate and the boundary beam and prevent the displacement resulting from an uncured sealant.

In addition, when the battery case is in use, if the battery case is at a high temperature, the sealant may be converted from a solid state to a liquid state, and the sealing strip may also expand; if there is no distance between the sealant and the groove, the sealant may come into contact with the sealing strip, leading to a failure of the sealing strip, and this further leads to a failure of the sealing of the battery case at a high temperature; when there is a distance between the sealant and the groove, and the closed chamber is configured, the contact between the sealant and the sealing strip may be effectively prevented, the sealing failure of the battery case at a high temperature may be further prevented, and thereby the sealing effect of the battery case at a high temperature is improved.

In some embodiments, the value of h3 may be set according to factors, such as the fluidity of the sealant, the amount of the sealant used, and the like. For example, if the fluidity of the sealant is high and the amount of the sealant used is large, the value of h3 may be set larger to prevent the sealant from spreading into the groove to be in contact with the sealing strip; if the fluidity of the sealant is low and the amount of the sealant used is small, the value of h3 may be set smaller to prevent a waste of space, which contributes to space saving and further downsizing the battery case.

In some embodiments, as shown in FIG. 2 and FIG. 3, the boundary beam 20 and the bottom plate 10 are connected by a fastener 40. The fastener 40 is disposed on the side of the groove 21 away from the accommodating space n0.

As shown in FIG. 3, the sealant 50 is at least disposed between the fastener 40 and the groove 21.

The fastener may be, but not limited to, studs, screws or bolts, and the like. When the fastener is a screw or a bolt, the end cap may be a nut, and the portion of the nut and the stud of the fastener may be designed in one piece. When the fastener is a stud, the end cap may be a nut that is not integrally formed with the stud.

Moreover, in FIG. 3, the accommodating space n0 may be located on the left side of the boundary beam 20, so the fastener 40 is disposed on the right side of the groove 21. The boundary beam 20 and the bottom plate 10 may be connected and fixed by the outer fastener 40, the sealing of the connection may be implemented by the inner sealing strip 30. Therefore, when the connection is implemented, the sealing effect of the connection is ensured.

In addition, when the sealant is at least located between the fastener and the groove, the bottom plate and the boundary beam may be fixed when the closed chamber is obtained.

In some embodiments, as shown in FIG. 3, the sealant 50 may be disposed at the periphery of the fastener 40. Accordingly, the sealant may be adopted to seal the fastener near the fastener to implement the sealing of the position where the fastener is disposed, thereby further improving the sealing effect.

In some embodiments, as shown in FIG. 2, the fastener 40 has an end cap 41 and a fastening column 42, which may pass through the bottom plate 10 and into the boundary beam 20. A distance h2 between the groove 21 and the end cap 41 is 3 mm to 8 mm.

In addition, in FIG. 2, the groove 21 has two side walls c2, the side wall c2 on the left side of the sealing strip 30 and the side wall c2 on the right side of the sealing strip 30, respectively. The side wall c2 on the right side is relatively close to the fastener 40, so h2 is the distance between the side wall c2 on the right side and the end cap 41 of the fastener 40.

Accordingly, by setting h2, there may be a certain distance between the end cap of the fastener and the groove. In addition, if the sealing strip is first disposed in the groove during the assembly process, and then the bottom plate and the boundary beam are connected by fasteners, damage, resulting from assembly tolerances when assembling the fastener, to the groove and even to the sealing strip may be prevented, and thereby damage to the sealing effect is further prevented.

If h2 is set too large, the fastener is far away from the groove, which may result in the inability to effectively compress the sealing strip. That is, the sealing strip may not be tightly pressed in the middle through the bottom plate and the boundary beam, resulting in a failure of sealing. Moreover, this may lead the fastener to be disposed at an edge of the connection, which may result in unstable connection between the boundary beam and the bottom plate.

Therefore, when h2 is set a proper size, the sealing effect and connection stability of the connection may be effectively improved.

In some embodiments, h2 may be further set to be 5 mm to 6.5 mm, so that the sealing effect and connection stability of the connection may be further improved.

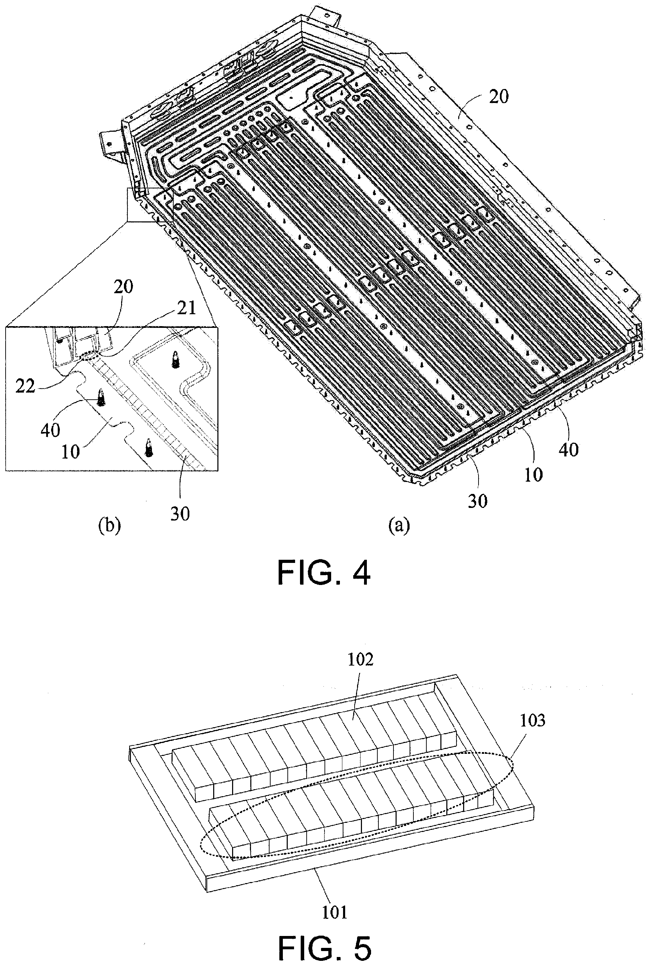

In some embodiments, as shown in FIG. 1 and FIG. 4, the boundary beam 20 is disposed around the periphery of the bottom plate, so the boundary beam 20 and the bottom plate 10 together may form an accommodating space n0.

The groove 21 may be disposed in an embracing manner, and the sealing strip 30 may be disposed in an embracing manner (the sealing strip is disposed in the groove 21 on the bottom surface of the boundary beam 20, so only part of the sealing strip 30 is illustrated in the drawing, but this does not mean that the sealing strip 30 is only disposed at the position illustrated in the drawing), thereby implementing an effective sealing of the connection.

Meanwhile, multiple fasteners 40 may be configured and distributed in an embracing manner (as shown in FIG. 1) to implement the effective connection of the boundary beam 20 and the bottom plate 10.

Note that in FIG. 4, for the clarity of the sealing strip 30 and the groove 21, the structure in the solid line frame in the upper right corner of part (a) is enlarged, and the enlarged structure is shown in the lower left corner of part (b).

In addition, the contour of the orthographic projection of the boundary beam 20 on the bottom plate 10 may be rectangular (as shown in FIG. 1), other shaped (e.g., hexagonal as shown in FIG. 4), or the like, which may be set according to actual requirements and is not limited herein.

In some embodiments, the ratio of a half of the difference between the second volume and the first volume to the volume of the closed chamber is 1/4 to 2/3.

That is, when a half of the difference between the second volume and the first volume is defined as the first value, the ratio of the first value to the volume of the closed chamber is 1/4 to 2/3, or the ratio of the volume of the closed chamber to the first value is 1.5 to 4.

Reasons for such a setting is illustrated as follows.

When the ratio of the first value to the volume of the closed chamber is too small, it means that the volume of the closed chamber is large. If the sealing strip has a certain flexibility, during assembly, the sealing strip may be twisted in the groove. Accordingly, the sealing strip is not even enough in the groove, and the contact between the groove bottom of the groove and the bottom plate is not even enough, in turn, resulting in poor sealing effect. Meanwhile, the volume of the closed chamber is large, which further results in a waste of space, thereby not contributing to the improvement of space utilization.

When the ratio of the first value to the volume of the closed chamber is too large, it means that the volume of the closed chamber is small. During assembly, due to the assembly tolerances, the volume of the closed chamber on the left side of the sealing strip may be different from the volume of the closed chamber on the right side of the sealing strip. If the volume of the closed chamber on a certain side is too small, when the sealing strip expands, the closed chamber on the certain side may not be able to provide enough space for the expansion of the sealing strip, resulting in the sealing strip separating the bottom plate from the boundary beam, resulting in the failure of the sealing.

Therefore, setting the ratio of the first value to the volume of the closed chamber in a proper range may not only prevent the sealing strip from being twisted during assembly but also prevent the volume of the closed chamber on a certain side from being too small, and meanwhile the space utilization may be improved.

In the subsequent paragraphs, with reference to specific embodiments, an air tightness test is performed to test the sealing effect of the battery case provided by the embodiments of the invention

Before the test, the battery case illustrated in the foregoing paragraphs is applied to the battery pack, and then the test is performed on the battery pack.

### 1. Test method:

The battery pack is inflated with an inflation pressure of 4.6KPa. The pressure is maintained at 4.6KPa and the pressure holding time is 60s. The timing starts when the pressure holding time ends, and the pressure in the battery pack is tested when the timing reaches 60s.

### 2. Test conditions:

The first temperature is 25°C, the second temperature is 60°C, and the humidity is maintained at 70%. Before the test, the battery pack is required to be set aside in the test environment for 2 hours or more. If it requires to repeat the test, the interval between each test time is 50 mins or more. During testing, perceptible airflow around the battery pack is excluded.

### 3. Test results:

The test results are illustrated in Table 1, where in Table 1, V0 represents the volume of the closed chamber, V1 represents the first volume of the sealing strip at the first temperature, V2 represents the first volume of the sealing strip at the second temperature, and P represents the amount of leakage.

According to Table 1, conclusions are illustrated as follow.
1. In Embodiment 2, Embodiment 4, Embodiment 6, Embodiment 7, Embodiment 9, Embodiment 10, and Embodiment 11, (V2-V1)/2V0 is between 0.25 and 0.67, and the corresponding leakage is between 5.9KPa and 13.2KPa. The leakage is small, indicating that the sealing effect is favorable.
2. When (V2-V1)/2V0 is less than 0.25 or greater than 0.67, although the leakage has increased slightly, the increase is not large, indicating that the sealing effect is still favorable but a little worse than (V2-V1)/2V0 between 0.25 and 0.67.
3. By comparing the embodiments and the comparative example, when (V2-V1)/2 is greater than or equal to V0, that is, when (V2-V1)/2V0 is greater than or equal to 1, there has been a significant increase in leakage, and the increase is larger, indicating that when (V2-V1)/2 is less than V0, the leakage may be effectively reduced.

**Table 1**

| No. | V2 (cm³) | V1 (cm³) | (V2-Vl)/2 (cm³) | V0 (cm³) | (V2-V1)/2V0 | P/KPa |
|---|---|---|---|---|---|---|
| Embodiment 1 | 172 | 160 | 6 | 32 | 0.19 | 19.8 |
| Embodiment 2 | 172 | 140 | 16 | 32 | 0.50 | 8.1 |
| Embodiment 3 | 172 | 120 | 26 | 32 | 0.81 | 17.6 |
| Embodiment 4 | 172 | 140 | 16 | 24 | 0.67 | 13.2 |
| Embodiment 5 | 172 | 140 | 16 | 20 | 0.80 | 18.4 |
| Embodiment 6 | 172 | 140 | 16 | 48 | 0.33 | 5.9 |
| Embodiment 7 | 172 | 140 | 16 | 64 | 0.25 | 10.2 |
| Embodiment 8 | 172 | 140 | 16 | 68 | 0.24 | 17.3 |
| Embodiment 9 | 200 | 160 | 20 | 32 | 0.63 | 9.8 |
| Embodiment 10 | 192 | 160 | 16 | 32 | 0.50 | 7.4 |
| Embodiment 11 | 186 | 160 | 13 | 32 | 0.41 | 8.9 |
| Comparative example 1 | 172 | 140 | 16 | 16 | 1.00 | 39.2 |
| Comparative example 2 | 172 | 140 | 16 | 14 | 1.14 | 40.5 |

In some embodiments, the bottom plate may be, but is not limited to, a liquid cooling plate.

In some embodiments, in addition to the structure, the battery case may also include other structures for implementing the function of the battery case, which may be configured according to actual requirements, which is not limited herein.

Based on the same inventive concept, the embodiments of the invention provide a battery device, as shown in FIG. 5, which may include the battery case 101 provided in the embodiments of the invention, and a battery 102 disposed in the battery case 101.

In some embodiments, as shown in FIG. 5, at least one battery pack 103 or battery module (not shown) may be disposed in the battery case 101, and each battery pack 103 or battery module may include multiple batteries 102.

The number of batteries configured is not limited to that shown in FIG. 5. Specifically, the number of batteries configured may be set according to actual requirements, which is not limited herein.

In addition, the electrical connection relationship of every battery may be set as series connection, parallel connection or series-parallel connection according to actual requirements, which is not limited herein.

In some embodiments, in addition to the battery, other structures that may be disposed in the battery case to implement the function of the battery device. For example, but not limited to, a battery management system, a high-voltage power distribution box, and the like. The specific configuration may be according to actual requirements, which is not limited herein.

In some embodiments, the battery device may be, but not limited to, a battery pack.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery case (101), comprising a bottom plate (10) and a boundary beam (20) connected to the bottom plate (10), wherein the boundary beam (20) and the bottom plate (10) form an accommodating space (n0) for accommodating batteries;
a groove (21) is disposed on a side surface of the boundary beam (20) facing the bottom plate (10), the groove (21) is disposed around the accommodating space (n0), a sealing strip (30) is disposed in the groove (21) along an extending direction of the groove (21), the sealing strip (30) is in contact with a groove bottom (c1) of the groove (21) and the bottom plate (10), respectively, there is a closed chamber (22) between at least one side wall (c2) of the groove (21) and the sealing strip (30);
wherein the sealing strip (30) has a first volume at a first temperature, the sealing strip (30) has a second volume at a second temperature, the first temperature is less than the second temperature, and a half of a difference between the second volume and the first volume is less than a volume of the closed chamber (22).

2. The battery case (101) according to claim 1, wherein a ratio of the half of the difference between the second volume and the first volume to the volume of the closed chamber (22) is 1/4 to 2/3.

3. The battery case (101) according to claim 1, wherein the first temperature is 10°C to 30°C, and the second temperature is 40°C to 70°C.

4. The battery case (101) according to claim 1, wherein carbon dioxide, nitrogen, or an inert gas is provided in the closed chamber (22).

5. The battery case (101) according to claim 1, wherein air is provided in the closed chamber (22), and humidity in the closed chamber (22) is less than or equal to 50%.

6. The battery case (101) according to claim 1, wherein there is the closed chamber (22) between two side walls of the groove (21) and the sealing strip (30).

7. The battery case (101) according to claim 1, wherein a length of the closed chamber (22) in a first direction is greater than a half of magnitude of expansion of the sealing strip (30) in the first direction;
wherein the first direction is perpendicular to the extending direction of the groove (21) and parallel to a surface of the bottom plate (10); the magnitude of the expansion is a difference between a length of the sealing strip (30) at the second temperature and a length of the sealing strip (30) at the first temperature in the first direction.

8. The battery case (101) according to claim 7, wherein the length of the closed chamber (22) in the first direction is 2 mm to 4 mm.

9. The battery case (101) according to claim 1, wherein a cross-sectional area of the closed chamber (22) in a direction perpendicular to the extending direction of the groove (21) is 4 mm² to 18 mm².

10. The battery case (101) according to any one of claims 1 to 9, wherein a sealant (50) is disposed between the boundary beam (20) and the bottom plate (10), and the sealant (50) is disposed in a side of the groove (21) away from the accommodating space (n0).

11. The battery case (101) according to claim 10, wherein there is a distance between the sealant (50) and the groove (21).

12. The battery case (101) according to claim 10, wherein the boundary beam (20) and the bottom plate (10) are connected by a fastener (40);
the fastener (40) is disposed on the side of the groove (21) away from the accommodating space (n0);
the sealant (50) is disposed at least between the fastener (40) and the groove (21).

13. A battery device, comprising the battery case (101) according to any one of claims 1 to 12, and a battery (102) disposed in the battery case (101).
